**Europäisches Patentamt**

**European Patent Office**

**Office européen des brevets**

(19)

(11) Numéro de publication : **0 387 168 B1**

(12) **FASCICULE DE BREVET EUROPEEN**

(45) Date de publication du fascicule du brevet :
09.12.92 Bulletin 92/50

(51) Int. Cl.⁵ : **B65G 13/12**

(21) Numéro de dépôt : **90420121.7**

(22) Date de dépôt : **07.03.90**

(54) **Tasseau de support de charge à organes de roulement escamotables.**

(30) Priorité : **10.03.89 FR 8903432**

(43) Date de publication de la demande :
**12.09.90 Bulletin 90/37**

(45) Mention de la délivrance du brevet :
**09.12.92 Bulletin 92/50**

(84) Etats contractants désignés :
**DE ES GB IT**

(56) Documents cités :
**WO-A-87/02433**
**DE-A- 2 152 430**
**DE-A- 3 212 793**
**DE-A- 3 637 559**
**US-A- 2 617 509**

(73) Titulaire : **DIMECO ENOMA, Société Anonyme**
**Zone Industrielle, 16, rue Gay Lussac, B.P.**
**1257**
**F-25004 Besançon Cédex (FR)**

(72) Inventeur : **Diot, Joel**
**19, rue Platine**
**F-25480 Ecole Valentin (FR)**

(74) Mandataire : **Ropital-Bonvarlet, Claude**
**Cabinet BEAU DE LOMENIE, 51, avenue**
**Jean-Jaurès**
**F-69007 Lyon (FR)**

EP 0 387 168 B1

## Description

La présente invention concerne la technique du support et du déplacement aisé de charges diverses sur un plan de mobilisation généralement horizontal.

La présente invention concerne les dispositifs du genre ci-dessus mis en oeuvre dans toutes les applications dans lesquelles il convient de pouvoir supporter et déplacer aisément une charge lourde en vue de son transfert ou de son réglage de position.

A titre d'exemple industriel non limitatif, il convient de citer l'application aux tables de machines-outils sur lesquelles des charges diverses, constituées par soit des pièces d'ouvrage, soit par des outillages, doivent être placées, déplacées et réglées en position précise en fonction du travail à exécuter.

Pour assumer la fonction ci-dessus, la technique antérieure connaît un certain nombre de solutions faisant toutes généralement appel à une sorte de tasseau, le plus souvent métallique et de forme générale parallélipipédique, pouvant être fixé, en étant posé ou encastré, sur un plan de support tel que celui d'une table d'entrée ou de travail de machines-outils.

Le tasseau est constitué par un barreau possédant au moins une face plane à partir duquel fait normalement saillie une série d'organes de roulement escamotables appartenant à des cartouches disposées dans des logements borgnes exécutés perpendiculairement à partir de la face plane. Les organes de roulement peuvent être constitués par des billes conférant une possibilité de déplacement omnidirectionnel ou par des galets autorisant un déplacement unidirectionnel. Un plan de support de charge est généralement constitué par l'association de plusieurs tasseaux qui sont disposés parallèlement les uns aux autre.

En règle générale, les organes de roulement sont respectivement associés à un moyen de rappel les maintenant normalement en saillie hors de la face plane et autorisant un effacement sous charge.

Pour illustrer une telle technique, il est possible de considérer l'enseignement fourni par le brevet **DE-A-3 212 793** ou par le brevet **US 2 617 509**.

Le moyen de rappel peut être mécanique en étant constitué par un ressort. Un tel moyen de rappel est fiable mais présente l'inconvénient de n'accepter qu'une contrainte de charge limitée.

La technique antérieure a proposé, également, de remplacer les moyens de rappel mécanique par des moyens de rappel hydrauliques en constituant chaque cartouche sous la forme d'un piston coulissant avec étanchéité dans le logement qui lui est réservé. Une alimentation hydraulique, par l'intermédiaire du fond du logement, permet de commander la course d'extension de l'organe de roulement. Tel est le cas de la demande **DE-A-2 152 430**.

Par un tel moyen, il est possible d'accroître la résistance à la charge. Cependant, les expériences ont permis de constater que de tels moyens étaient de réalisation complexe et posaient des problèmes de montage, d'entretien, notamment des garnitures d'étanchéité devant obligatoirement être interposées entre les pistons et les logements.

Les dispositifs à moyen de rappel hydraulique présentent un autre inconvénient tenant à la difficulté de réalisation. Il est, en effet, nécessaire de procéder à une exécution particulièrement précise des différents logements et des moyens d'alimentation en fluide hydraulique, ce qui pose des problèmes de réalisation pratique et à coût acceptable pour l'exécution de tasseaux de support de charges de grandes longueurs.

Pour tenter de remédier à cet inconvénient, la technique antérieure a aussi proposé de réaliser des tasseaux à moyens de rappel hydraulique, par association de segments modulaires composés chacun de un ou de plusieurs organes de roulement. Une telle technique ne donne pas satisfaction car l'association des segments modulaires dans un alignement rigoureux pose des problèmes, difficilement solubles, de liaisons mécaniques, d'alignement, de jonctions hydrauliques et de régularité de section, principalement sur des grandes longueurs et lorsque le tasseau doit être encastré dans la rainure d'une table de machine-outil.

Il doit être signalé, par ailleurs, que les solutions actuellement connues ne permettent pas de passer aisément d'une conception de tasseau de support de charge à base d'organes de roulement omnidirectionnels à un tasseau à base d'organes de roulement unidirectionnels.

Il doit être signalé, de façon supplémentaire, que la technique antérieure ne permet pas de réaliser des tasseaux de supports de charge à base d'organes de roulement du type unidirectionnel dont la direction de glissement qu'ils confèrent est différente de l'axe longitudinal du tasseau.

Au demeurant donc, les moyens techniques actuels pour régler le problème évoqué ci-dessus ne donnent pas entière satisfaction pour ce qui concerne les possibilités d'adaptation, les capacités de charge ou d'effacement, les possibilités de réalisation à un prix de revient acceptable sur des grandes longueurs, ainsi que la capacité de pouvoir adapter sur un même tasseau, indifféremment ou simultanément, des organes de roulement du type omnidirectionnel ou unidirectionnel.

L'objet de l'invention est de combler la lacune générale ci-dessus en proposant un nouveau tasseau de support de charge à organes de roulement escamotables, dont la conception est justement choisie pour répondre aux exigences ci-dessus qui ne sont pas satisfaites actuellement par les techniques connues.

Pour atteindre les objectifs ci-dessus, le tasseau de support de charge à organes de roulement escamotables, du type comprenant un barreau présentant, à partir d'une même face, des logements borgnes perpendiculaires à ladite face et respectivement occupés par une cartouche de roulement constituée par un piston pourvu d'un organe de roulement et susceptible de coulisser dans le logement, contre l'action d'un moyen de rappel, sur une course axiale comprise entre une position de support dans laquelle l'organe de roulement fait saillie hors de la face et une position d'effacement dudit organe par rapport à la même face, est caractérisé en ce que :

- le barreau est constitué par un segment de profilé extrudé,
- et chaque cartouche est maintenue dans son logement en étant immobilisée angulairement et libre axialement sur la course d'effacement, par au moins une goupille amovible qui est montée dans un trou pratiqué dans le barreau de façon sécante au logement, pour être engagée dans une encoche du piston.

Diverses autres caractéristiques ressortent de la description faite ci-dessous en référence aux dessins annexés qui montrent, à titre d'exemples non limitatifs, des formes de réalisation de l'objet de l'invention.

Les **fig. 1 et 2** sont des vues schématiques illustrant le domaine technique de l'objet de l'invention.

La **fig. 3** est une coupe-élévation partielle prise, à plus grande échelle, selon la ligne **III-III** de la **fig. 2**.

La **fig. 4** est une coupe transversale prise selon la ligne **IV-IV** de la **fig. 3**.

La **fig. 5** est une coupe transversale analogue à la **fig. 4** illustrant une variante de réalisation.

La **fig. 6** est une coupe transversale d'une autre forme d'exécution d'un élément constitutif de l'objet de l'invention.

La **fig. 7** est une vue éclatée illustrant différentes possibilités de l'objet de l'invention.

La **fig. 8** est une coupe-élévation analogue à la **fig. 3**, illustrant une autre forme d'exécution d'un des moyens techniques de l'invention.

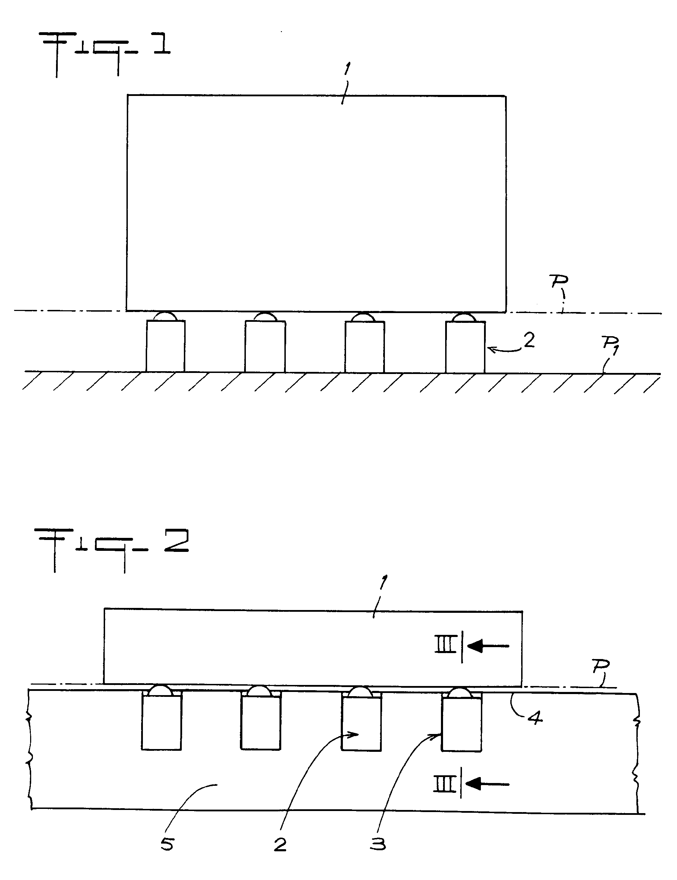

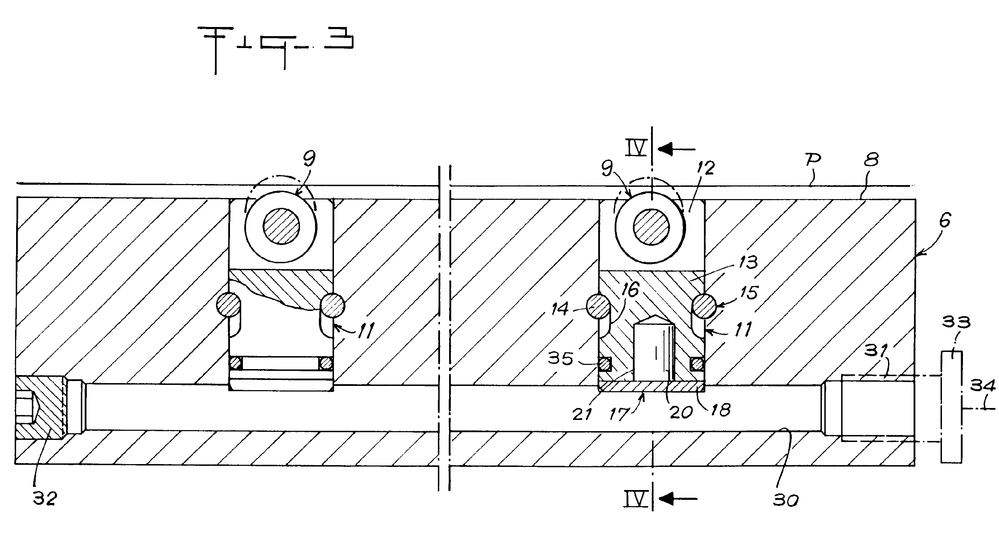

Les **fig. 1 et 2** montrent schématiquement l'application de l'objet de l'invention à la définition ou à la matérialisation d'un plan **P** de support d'une charge lourde **1** devant être déplacée par ripage sur le plan **P** en vue d'être amenée à une position déterminée, d'être transférée d'une position à une autre ou d'être réglée relativement. La matérialisation du plan de support de charge **P** est assurée par l'utilisation de **n** tasseaux de charge **2** conformes à l'invention, qui sont placés parallèlement les uns aux autres en étant posés sur un plan de support **P₁** comme dans l'exemple illustré par la **fig. 1** ou en étant encastrés dans des rainures **3** ménagées à partir de la surface supérieure **4** d'une table **5**, par exemple d'une machine-outil. Dans les deux cas d'application ci-dessus, les tasseaux **2** sont immobilisés par tout moyen convenable en étant bridés ou fixés par l'intermédiaire de vis ou analogues.

Le tasseau de support de charge **2**, conforme à l'invention, est du type à organes de roulement escamotables. Un tel tasseau est constitué par un barreau **6** qui est réalisé, selon l'invention, par extrusion de manière à posséder une forme constante sur une grande longueur à partir de laquelle il est possible de tronçonner des segments de barreau en fonction de la longueur devant être conférée au tasseau. De préférence, le barreau **6** est réalisé en métal.

Le barreau **6** est conformé pour comporter au moins une face de référence **7** et au moins une face plane dressée **8** à partir de laquelle font normalement saillie des organes de roulement **9**. Selon une forme d'exécution préférée, le barreau **6** est réalisé sous une forme parallélipipédique rectangle et possède généralement aussi deux faces longitudinales **10** qui sont dressées parallèlement entre elles et d'équerre avec la face de référence **7** pour permettre un encastrement possible dans une rainure **3** de table de machine-outil. Il doit être considéré que le barreau **6** pourrait aussi présenter, en section droite transversale, une forme en **"T"** inversé, de manière à permettre son adaptation dans les rainures de même forme généralement présentées par les tables de machines-outils.

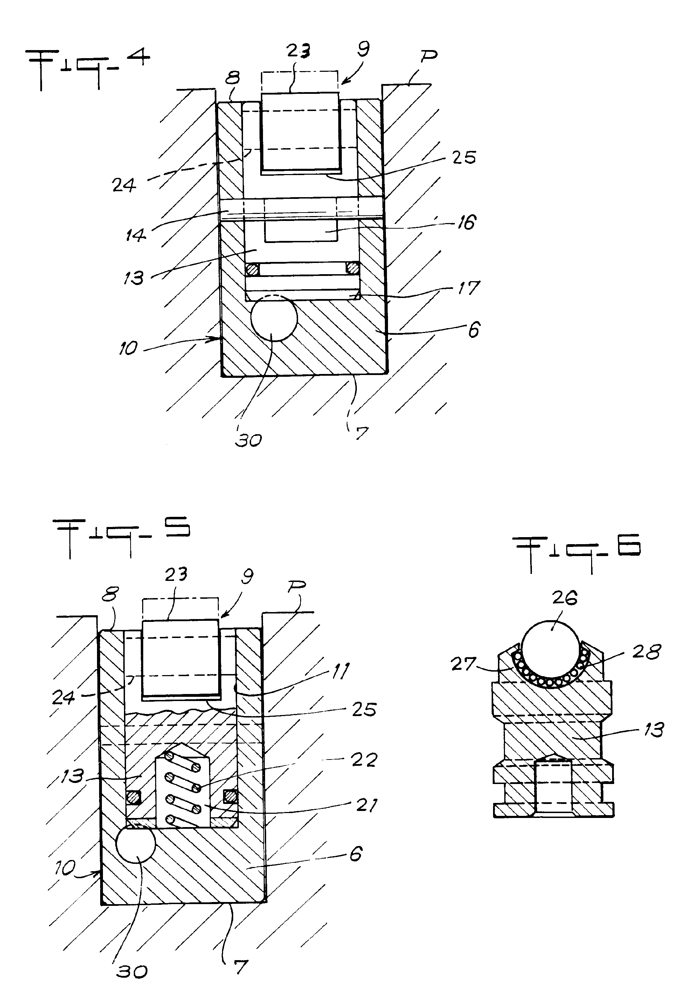

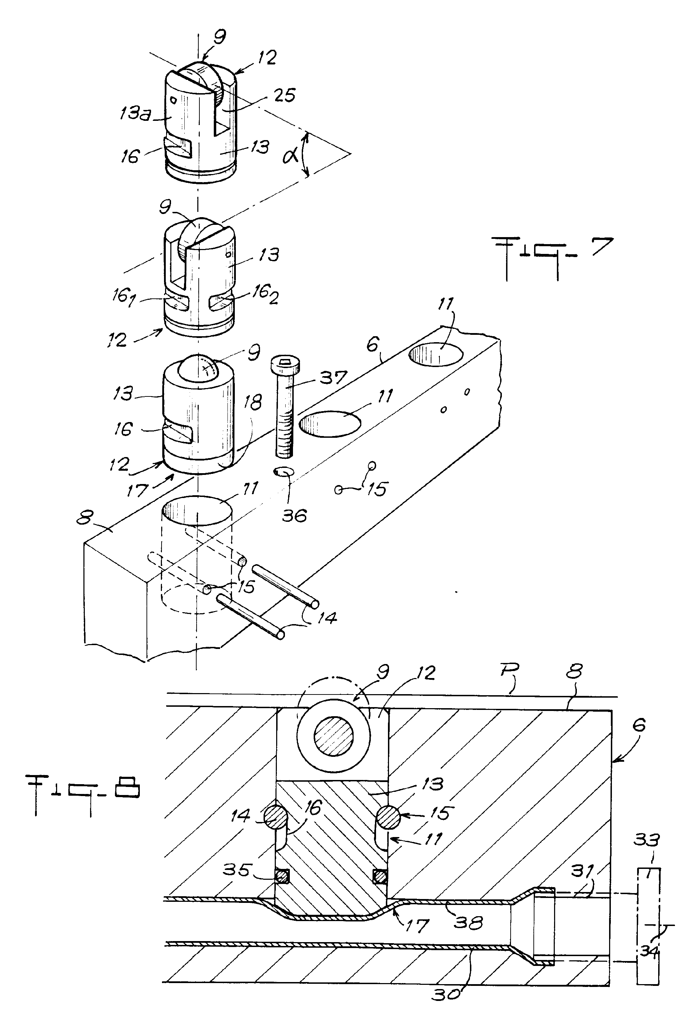

Le barreau **6** est usiné pour comporter, de place en place et à partir de la face **8**, des logements **11** de préférence cylindriques, borgnes, perpendiculaires au plan de la face et présentant entre eux un écartement soit constant, soit variable. Chaque logement **11** contient une cartouche de roulement **12** qui est constituée par un piston **13** portant un organe de roulement **9**. Le piston **13** est usiné de manière à pouvoir coulisser avec jeu à l'intérieur du logement borgne **11** dans lequel il est adapté, de manière à être immobilisé angulairement, mais libre de coulisser axialement sur une course comprise entre une position de support de charge dans laquelle l'organe de roulement **9** fait saillie hors de la face **8**, tel qu'illustré en traits mixtes aux **fig. 3** et **4**, et une position d'effacement dudit organe par rapport à la même face, comme illustré en trait plein aux mêmes figures. Les moyens, permettant l'immobilisation angulaire avec liberté axiale du piston **13** dans le logement **11**, sont constitués par au moins une goupille **14** montée à glissement doux dans un trou **15** ménagé dans le barreau **6** parallèlement à la face **8** et orthogonalement à l'axe du logement **11** pour être sécant à ce dernier. Ces moyens comprennent, par ailleurs, une encoche **16** ménagée dans la périphérie du piston **13** sur une profondeur radiale complémentaire à la partie sécante du trou **15**, de manière à reconstituer ce dernier à l'intérieur du logement **11** occupé par le piston **13**. L'encoche **16** est ménagée sur une longueur axiale correspondant à la course d'effacement devant être conférée au piston **13**.

De préférence, les moyens selon l'invention font intervenir deux goupilles **14** destinées à être engagées dans deux trous **15** pratiqués de façon diamètralement opposée par rapport au logement borgne **11** dans le barreau **6**. Dans un tel cas, le piston **13** comporte, également, deux encoches **16** de mêmes caractéristiques exécutées à la manière de méplats diamétralement opposés.

Chaque cartouche **12** comprend, également, un moyen **17** de rappel élastique sollicitant toujours le piston **13** en course d'extension, de manière à placer l'organe de roulement **9** en position de support de charge en saillie par rapport à la face **8**. Le moyen de rappel **17** peut être constitué de plusieurs façons différentes. A titre d'exemple, selon l'illustration des **fig. 3 et 4**, le moyen **17** est constitué par un tampon **18** en élastomère, adapté à la base du piston **13** pour être interposé entre cette dernière et le fond du logement borgne **11**. Le tampon **18** peut être constitué par une couche uniforme de matière déformable élastiquement ou, encore, par une pièce pourvue d'un doigt de centrage **20** engagé dans un alésage borgne **21** exécuté à partir du fond du piston **13**, concentriquement à l'axe de ce dernier.

La **fig. 5** montre une variante de réalisation selon laquelle le moyen **17** est constitué par un ressort hélicoïdal **22** travaillant à la compression, interposé entre le fond **19** du logement **11** et le piston **13**.

Le moyen de rappel élastique de type mécanique, selon l'une ou l'autre des variantes décrites ci-dessus, assume une fonction de maintien du piston **13** dans la position de saillie de l'organe de roulement **9** apte ainsi à matérialiser le plan de support de charge **P** en association avec les organes d'un même tasseau et ceux de tasseaux parallèles. Une charge **1** peut ainsi être supportée dans des conditions de ripage ou de déplacement aisées, tant que la contrainte qu'elle exerce sur les organes de roulement **9** n'excède pas la capacité des moyens de rappel **17**. Dans le cas contraire, les organes de roulement s'effacent ou s'escamotent en-dessous du plan **P** de sorte que la charge **1** repose alors sur les différentes faces **8** sur lesquelles elle peut être immobilisée par tout moyen approprié. Dans le cas d'application selon la **fig. 2**, la charge **1** prend alors appui sur la face supérieure **4** de la table **5**.

Dans le cas d'application à une table de machine-outil, cet exemple de fonctionnement intervient lorsqu'après réglage de position aisément conféré à la charge **1**, cette dernière est bridée sur la table **5** de manière à occuper une position déterminée immuable pour l'exécution de travaux d'usinage.

La capacité d'effacement de chaque organe de roulement **9** est conférée par la course d'escamotage du piston **13** autorisée par les encoches **16** qui sont déplacées relativement par rapport aux goupilles **14** assumant une double fonction d'immobilisation angulaire du piston **13** et d'immobilisation axiale de ce dernier en constituant des butées d'extension et d'escamotage.

Les trous **15**, pratiqués dans le barreau **6**, sont exécutés avec une tolérance permettant un engagement et un enlèvement facile des goupilles **14** qui permettent ainsi le montage ou le remplacement aisé d'une cartouche **12** dans un logement **11**, s'il est recherché une adaptation des moyens de rappel **17** en fonction de la charge devant être supportée ou encore une modification des caractéristiques de l'organe de roulement **9**.

Cette capacité de modification rapide est prévue selon l'invention pour permettre de monter, dans certains au moins des logements **11**, des cartouches de roulement **12** pouvant être équipées avec un organe de roulement **9** constitué sous la forme d'un galet **23** monté sur un axe **24** de manière à pouvoir tourner librement dans une mortaise ouverte **25** pratiquée à partir de l'extrémité supérieure du piston **13**.

Dans un tel cas, les encoches **16** sont, de préférence, ménagées selon une direction parallèle à l'axe **24** de façon que ces encoches s'étendent perpendiculairement à l'axe longitudinal du barreau **6** pour autoriser une direction de roulement parallèle à ce dernier.

Il est également possible de réaliser les cartouches de roulement **12**, de telle sorte que chaque piston **13** porte, par sa face supérieure, un organe de roulement **9** constitué par une bille **26** sertie dans un logement semi-sphérique **27**, avec interposition d'un lit **28** de microbilles à circulation. Dans un tel cas, les organes de roulement confèrent une possibilité de déplacement omnidirectionnelle.

La **fig. 7** illustre, de façon éclatée, les possibilités ainsi offertes par le tasseau selon l'invention dont le barreau **6** peut être garni, pour certains ou pour partie de ses différents logements **11**, avec des cartouches de roulement **12** comportant, soit une bille **6**, soit un galet **23**. Cette figure montre la possibilité d'usiner les encoches **16** du piston **13**, de manière que celles-ci soient parallèles à la mortaise **25**, de façon que la direction de roulement fasse un angle $\alpha$ de 90°, par exemple avec la direction précédemment définie. Cet exemple de réalisation est illustré par le piston référence **13a** à la **fig. 7**.

Il est avantageux de réaliser certains au moins des pistons **13** de manière qu'ils comportent plus d'une série d'encoches **16** et, par exemple, deux paires d'encoches diamétralement opposées **16$_1$** et **16$_2$** qui permettent à volonté de monter le piston **13** dans le logement **11** selon une orientation préférentielle en choisissant la paire d'encoches devant coopérer avec les goupilles **14** pour assurer l'immobilisation angulaire de la cartouche, tout en autorisant la course axiale d'effacement. Selon les caractéristiques d'encombrement et, plus particulièrement le diamètre du piston **13**, il est même possible d'envisager de ménager à la périphérie extérieure de ce dernier plus de deux paires d'encoches.

Selon une disposition supplémentaire de l'invention, le barreau **6** est extrudé de manière à comporter d'extrusion un conduit interne **30** parallèle à l'axe longitudinal, pouvant être prévu pour être centré sur le plan médian longitudinal ou pour être décalé latéralement par rapport à ce plan comme cela est illustré par la **fig. 4**. Le conduit **30** comporte, aux extrémités du barreau **6**, des taraudages **31** permettant le montage, soit d'un bouchon **32**, soit d'un raccord **33** pour la connexion avec un circuit **34** de fourniture d'un fluide hydraulique sous pression.

Dans un tel cas, les logements **11** sont pratiqués dans le barreau **6**, de manière à communiquer par leur fond **19** avec le conduit **30**. Chaque piston **13** est alors pourvu d'une garniture d'étanchéité périphérique **35**, de telle sorte que l'ensemble logement **11** - piston **13** se conduise comme un cylindre hydraulique.

L'ensemble des moyens ci-dessus constitue un moyen de rappel hydraulique chaque fois que du fluide hydraulique sous pression est admis dans le conduit **30** pour solliciter en extension les pistons **13** afin d'amener les organes de roulement **9** en position de saillie par rapport à la face **8**. Le raccordement du conduit **30** à un circuit de refoulement, de préférence contrôlé par un limiteur de débit, autorise l'escamotage des pistons **13** sur la course d'effacement conférée par les encoches **16** coopérant avec les goupilles **14**. Le moyen de rappel hydraulique peut éventuellement être combiné avec le moyen de rappel mécanique constitué sous la forme du tampon **18** ou **20** ou du ressort **22**.

Il est généralement avantageux de prévoir la délimitation par extrusion du conduit **30** de façon décalée par rapport au plan, de manière à ménager une réserve de matière suffisante à l'opposé du conduit **30** par rapport au plan **x-x′** pour permettre l'exécution de trous **36** pour le passage de vis de fixation **37**, tel que cela est illustré par la **fig. 7**.

Les moyens selon l'invention permettent l'obtention d'un tasseau de support de charge de grande longueur, à partir d'un barreau **6** obtenu par extrusion et présentant, par construction, des faces de référence régulières constantes, planes, ainsi qu'un conduit axial **30** ne nécessitant que des opérations d'usinage de reprise pour délimiter les taraudages **31**.

La **fig. 8** montre qu'il peut être avantageusement prévu de garnir le conduit interne **30** d'une gaine tubulaire étanche **38** constituée par un tube souple maintenu dans les raccords **31** pour être en relation constante avec le circuit **34**. Le tube **38** coopère avec les bases des pistons **13** et permet, le cas échéant, de supprimer la ou les garnitures d'étanchéité **35** prévues sur ces derniers.

Il est préférable, mais non impératif, que le conduit **30** présente un diamètre inférieur à celui des logements **11**.

L'invention n'est pas limitée aux exemples décrits et représentés, car diverses modifications peuvent y être apportées sans sortir de son cadre.

## Revendications

1. Tasseau de support de charge, à organes de roulement (**9**) escamotables, du type comprenant un barreau (**6**) présentant, à partir d'une même face (**8**), des logements borgnes (**11**) perpendiculaires à ladite face et respectivement occupés par une cartouche de roulement (**12**) constituée par un piston (**13**) qui est maintenu dans son logement en étant immobilisé angulairement et qui est pourvu d'un organe de roulement et susceptible de coulisser dans le logement, contre l'action d'un moyen de rappel, sur une course axiale comprise entre une position de support de charge dans laquelle l'organe de roulement fait saillie hors de la face et une position d'effacement dudit organe par rapport à la même face,
caractérisé en ce que :
- le barreau (**6**) est constitué par un segment de profilé extrudé,
- et chaque cartouche (**12**) est maintenue dans son logement en étant immobilisée angulairement et libre axialement sur la course d'effacement, par au moins une goupille (**14**) amovible qui est montée dans un trou (**15**) pratiqué dans le barreau de façon sécante au logement, pour être engagée dans une encoche (**16**) du piston.

2. Tasseau selon la revendication 1, caractérisé en ce qu'il comprend des cartouches de roulement (**12**) respectivement pourvu d'un piston (**13**) associé à un moyen de rappel mécanique interposé entre le fond du logement et le piston.

3. Tasseau selon la revendication 2, caractérisé en ce que le moyen de rappel mécanique est constitué par un ressort hélicoïdal (**22**) travaillant à la compression, en partie centré dans un alésage axial borgne (**21**) ménagé à partir de la base du piston.

4. Tasseau selon la revendication 2 ou 3, caractérisé en ce que le moyen de rappel mécanique est constitué par un tampon en élastomère (**18**) rapporté à la base du piston.

5. Tasseau selon la revendication 1, caractérisé en ce qu'il comprend des cartouches de roulement (**12**) respectivement pourvues d'un piston (**13**) associé à un moyen de rappel hydraulique.

6. Tasseau selon la revendication 5, caractérisé en ce que le moyen de rappel hydraulique comprend un conduit longitudinal (**30**) venu d'extrusion dans le barreau, au moins un raccord extrême (31) de branchement à un circuit de fourniture d'un fluide hydraulique sous pression, des logements (11) pratiqués dans le barreau pour communiquer par leur fond avec le conduit et au moins une garniture d'étanchéité périphérique (35) portée par chaque piston pour coopérer avec la paroi du logement.

7. Tasseau selon la revendication 5 ou 6, caractérisé en ce que le fond des logements est largement sécant au conduit qui est garni par un tube souple, étanche (38), maintenu par le raccord en relation avec le circuit de fourniture du fluide hydraulique sous pression.

8. Tasseau selon la revendication 6 ou 7, caractérisé en ce que le conduit (30) présente un diamètre inférieur à celui des logements et se trouve décalé latéralement par rapport à l'axe de chaque logement.

9. Tasseau selon la revendication 1, 2 ou 5, caractérisé en ce qu'il comprend des cartouches de roulement (12) dont certaines au moins sont constituées par un piston portant une bille en tant qu'organe de roulement.

10. Tasseau selon la revendication 1, 2 ou 5, caractérisé en ce qu'il comprend des cartouches de roulement dont certaines au moins sont constituées par un piston portant un galet en tant qu'organe de roulement.

11. Tasseau selon la revendication 10, caractérisé en ce que le piston portant un galet possède plusieurs encoches angulairement décalées.

12. Tasseau selon la revendication 1 ou 11, caractérisé en ce que le barreau comporte pour chaque logement deux trous diamétralement opposés et en ce que chaque piston présente au moins deux paires d'encoches diamétralement opposées deux à deux.

**Patentansprüche**

1. Lastträgerkonsole mit versenkbaren Laufwerken (9), vom Typ umfassend einen Balken (6), der auf ein und derselben Seite (8) über Blindlager (11) senkrecht zur besagten Seite verfügt, in die jeweils eine Gleitkartusche (12) fährt, die aus einem Kolben (13) besteht, der in seinem Lager winklig festgehalten wird, und der ein Laufwerk aufweist und im Lager hin- und hergleiten kann, und zwar gegen die Kraft einer Rückholvorrichtung, auf einem Axialhub zwischen einer Lasttragposition, in der das Laufwerk aus der Seite heraussteht, und einer Position, in der er gegenüber der gleichen Seite versenkt ist, dadurch gekennzeichnet, daß
   - der Balken (6) aus einem Segment eines extrudierten Profils besteht,
   - und daß jede Kartusche (12) in ihrem Lager winklig festgehalten wird und sich axial auf dem Versenkungshub frei bewegen kann, und zwar dank mindestens eines herausnehmbaren Stifts (14), der in ein Loch (15) geführt wird, das schneidend zum Lager in den Balken gearbeitet ist, um in eine Aussparung (16) des Kolbens zu fassen.

2. Konsole gemäß Anspruch 1, dadurch gekennzeichnet, daß sie Gleitkartuschen (12) umfaßt, die jeweils mit einem Kolben (13) versehen sind, der mit einer mechanischen Rückholvorrichtung verbunden ist, die sich zwischen dem Boden des Lagers und dem Kolben befindet.

3. Konsole gemäß Anspruch 2, dadurch gekennzeichnet, daß die mechanische Rückholvorrichtung aus einer spiralförmigen Feder (22) zum Zusammendrücken besteht, die teilweise in der Mitte einer axialen Blindbohrung (21) sitzt, die vom Boden des Kolbens aus gearbeitet ist.

4. Konsole gemäß Anspruch 2 oder 3, dadurch gekennzeichnet, daß die mechanische Rückholvorrichtung aus einem Pfropfen aus Elastomer (18) besteht, der am Boden des Kolbens vorgesehen wird.

5. Konsole gemäß Anspruch 1, dadurch gekennzeichnet, daß sie Gleitkartuschen (12) aufweist, die jeweils über einen Kolben (13) verfügen, der mit einer hydraulischen Rückholvorrichtung verbunden ist.

6. Konsole gemäß Anspruch 5, dadurch gekennzeichnet, daß die hydraulische Rückholvorrichtung einen Längskanal (30) aufweist, der durch Extrusion in den Balken gearbeitet wurde, sowie mindestens einen Anschluß (31) am Ende, über den er an einen Kreislauf einer unter Druck stehenden Hydraulikflüssigkeit angeschlossen werden kann, außerdem Lager (11), die in den Balken gearbeitet sind und an ihrem Boden mit dem Kanal Verbindung haben, sowie mindestens eine rundlaufende Dichtung (35) zwischen jedem Kolben und der Wand des Lagers.

7. Konsole gemäß Anspruch 5 oder 6, dadurch gekennzeichnet, daß der Boden der Lager den Kanal weitgehend schneidet, wobei der Kanal mit einer biegsamen, dichten Leitung (38) versehen ist und vom Anschluß an den Kreislauf der unter Druck stehenden Hydraulikflüssigkeit gehalten wird.

8. Konsole gemäß Anspruch 6 oder 7, dadurch gekennzeichnet, daß der Kanal (30) einen geringeren Durchmesser als die Lager aufweist und gegenüber der Achse jedes Lagers seitlich versetzt angeordnet ist.

9. Konsole gemäß Anspruch 1, 2 oder 5, dadurch gekennzeichnet, daß sie Gleitkartuschen (12) umfaßt, von denen zumindest einige aus einem Kolben mit einer Kugel als Laufwerk bestehen.

10. Konsole gemäß Anspruch 1, 2 oder 5, dadurch gekennzeichnet, daß sie Gleitkartuschen aufweist, von denen zumindest einige aus einem Kolben mit einer Rolle als Laufwerk bestehen.

11. Konsole gemäß Anspruch 10, dadurch gekennzeichnet, daß der Kolben, der die Rolle trägt, über mehrere winklig versetzte Aussparungen verfügt.

12. Konsole gemäß Anspruch 1 oder 11, dadurch gekennzeichnet, daß der Balken bei jedem Lager zwei einander diametral gegenüberliegende Löcher aufweist, sowie dadurch, daß jeder Kolben mindestens zwei Paar Aussparungen aufweist, die einander jeweils paarweise gegenüberliegen.

**Claims**

1. Load-bearing cleat with retractable rolling members (9) of the type comprising a bar (6) which has, from a same face (8), blind housings (11) which are perpendicular to said face and respectively occupied by a rolling cartridge (12) constituted by a piston (13), said piston being maintained in its housing by being angularly immobilized and being provided with a rolling member and capable of sliding in the housing, against the action of a return means, on an axial path comprised between a load-bearing position in which the rolling member projects from the face and a retraction position of said member with respect to said face,

characterized in that :
- the bar (6) is constituted by an extruded section segment,
- and each cartridge (12) is maintained in its housing by being angularly immobilized and axially free on the retraction path, by at least one removable pin (14) which is mounted in a hole (15) made in the bar such that it cuts throught the housing so as to be engaged in a groove (16) of the piston.

2. Cleat according to claim 1, characterized in that it comprises rolling cartridges (12) respectively provided with a piston (13) associated to a mechanical return means which is interposed between the bottom of the housing and the piston.

3. Cleat according to claim 2, characterized in that the mechanical return means is constituted by a helical spring (22) which is in compression and partly centered in a blind axial bore (21) provided from the base of the piston.

4. Cleat according to claim 2 or 3, characterized in that the mechanical return means is constituted by an elastomer stopper (18) mounted on the base of the piston.

5. Cleat according to claim 1, characterized in that it comprises rolling cartridges (12) respectively provided with a piston (13) associated to a hydraulic return means.

6. Cleat according to claim 5, characterized in that the hydraulic return means comprises a longitudinal conduit (30) which is extruded in the bar, at least one extreme branch socket (31) which is branched to a circuit for supplying a hydraulic fluid under pressure, housings (11) made in the bar so as to communicate through their bottoms with the conduit and at least one peripheral packing (35) born by each piston in order to cooperate with the wall of the housing.

7. Cleat according to claim 5 or 6, characterized in that the bottom of the housings greatly cut through the conduit which is lined by a flexible, sealed tube (38), maintained by the socket relatively to the circuit for supplying the hydraulic fluid under pressure.

8. Cleat according to claim 6 or 7, characterized in that the diameter of the conduit (30) is less than the diameter of the housings and is laterally offset with respect to the axis of each housing.

9. Cleat according to claim 1, 2 or 5, characterized in that it comprises rolling cartridges (12), some of which are at least constituted by a ball-bearing piston as rolling member.

10. Cleat according to claim 1, 2 or 5, characterized in that it comprises rolling cartridges, some of which are at least constituted by a roller-bearing piston as rolling member.

11. Cleat according to claim 10, characterized in that the roller-bearing piston has many anglularly offset grooves.

12. Cleat according to claim 1 or 11, characterized in that the bar comprises two holes which are opposite and equal for every housing and in that every piston has at least two pairs of grooves which are opposite and equal in twos.

Fig. 1

Fig. 2

Fig. 3

Fig-4

Fig-5

Fig-6

Fig-7

Fig-8